# EUROPEAN PATENT SPECIFICATION

(11) **EP 4 002 132 B1**
(45) Date of publication and mention of the grant of the patent: **20.05.2026**
(21) Application number: 21197917.4
(22) Date of filing: 21.09.2021
(51) Int. Cl.: G06F 12/0871, G06F 1/26, G06F 1/30, G06F 1/3212, G06F 1/3234, G06F 3/06

(54) **ADAPTIVE DEVICE BEHAVIOR BASED ON AVAILABLE ENERGY**
ADAPTIVES GERÄTEVERHALTEN BASIEREND AUF DER VERFÜGBAREN ENERGIE
COMPORTEMENT ADAPTATIF DE DISPOSITIF EN FONCTION DE L'ÉNERGIE DISPONIBLE

(30) Priority: 19.11.2020 US 202016952819
(43) Date of publication of application: 25.05.2022
(73) Proprietor: INTEL Corporation, Santa Clara, CA 95054 (US)
(72) Inventor: BOYD, James A., Hillsboro, OR, 97124 (US)
(74) Representative: Rummler, Felix

(56) References cited:
- WO-A1-2007/018778
- CN-A- 108 710 583
- US-A1- 2020 192 798

## Description

### FIELD

The present disclosure relates to data persistence and protection against data loss.

### DESCRIPTION

Some computer systems utilize volatile memory to store content that can be rapidly accessed. But volatile memory requires a power supply to maintain the content. On system power failure or any system failure, content in buffers in volatile memory can be lost. For example, if the device has an independent power source (e.g., Intel^{®} Power Loss Imminent (PLI) circuitry, a capacitor or battery), content can be preserved in volatile memory or copied to nonvolatile memory.

The memory device may have protection against data loss by use of capacitance in the event of power loss, but not enough to back-up large amounts of data in volatile memory. Back-up may occur for internal queues, state or transfer buffers. As a result, some devices cannot provide persistence of larger amounts of data in a volatile memory or cache.
WO 2007/018778 A1 relates to a storage controller having a capacitor pack for storing energy to supply power during a main power loss, a temperature sensor that senses the capacitor pack temperature, and a CPU, which detects that the temperature of the capacitor pack has risen above a predetermined threshold while operating at a first voltage value and determines whether a projected lifetime of the capacitor pack is less than the warranted lifetime.
CN 108710583 A relates to a method and an apparatus for managing an SSD write cache area, computer equipment and a medium. The method comprises the steps of acquiring real-time standby power capacity; acquiring a data amount which can be written during a standby power period according to the standby power capacity; setting the size of the write cache area according to the data amount; and recording current detection time and the standby power capacity in NAND.
US 2020/192798 A1 relates to a cache flush method. The method comprises the following steps: receiving a cache flush request in a first phase of a persistent memory flush flow, wherein the first phase is initiated by a host processor, and the cache flush request requests that data in cache memory be flushed to persistent memory within a system; determining whether an error occurs in the first phase; sending a cache flush response in the first phase, wherein the cache flush response identifies whether an error is detected in the first phase; receiving a memory buffer flush request in a second phase of the persistent memory flush flow, wherein the second phase is initiated by the host processor upon completion of the first phase, and the memory buffer flush request requests that data in buffers of persistent memory devices in the system be flushed to persistent memory; and sending a memory buffer flush response in the second phase.

### SUMMARY

The present invention is defined by the independent claims. Further embodiments are set forth in the dependent claims.

### BRIEF DESCRIPTION OF THE DRAWINGS

FIG. 1 depicts an example of system startup.
FIG. 2 depicts an example of a scenario in which no energy is available to the device in the event of power loss.
FIG. 3 depicts an example of a device utilizing a portion of its volatile memory.
FIG. 4 depicts an example of energy allocation to a memory device.
FIGs. 5A and 5B depict examples of allocation of energy to multiple memory devices.
FIG. 6 depicts an example process.
FIG. 7 depicts a process.
FIG. 8 depicts a system.
FIG. 9 depicts an example environment.

### DETAILED DESCRIPTION

In some solutions, data persistence can be achieved by devices in various ways. The volatile data (e.g., cache) is exposed to the host for management by system software by periodic or "on request" flush commands issued to the device. On completion of the flush command, the host software determines the data has been copied to a persistent media and the host software may continue operation. However, software runtime data flushes impact performance as host software must wait for completion acknowledgement before continuing operation and the device should support a synchronization mechanism to permit data persistence.

In some solutions, the device does not expose that it utilizes buffers in volatile memory and the device solely supplies the energy to copy data to persistent media in response to detected host power loss. For example, a capacitor can be used to supply energy based on notification of power failure, invoking firmware or hardware to copy content of buffers to persistent media (e.g., non-volatile memory). However, the device may not have space to accommodate the capacitors to supply enough energy for long enough to flush (copy) all data out to the media. If there is not enough physical space to support the capacitors, some data may not be copied and can be lost.

In some solutions, the device has no buffers in volatile memory and all data is committed to persistent media per issuance prior to completion status being returned to the host. However, device performance may be inadequate by not being able to support any caching to volatile memory and performance can be subject to the devices' media speeds, which can be slow for persistent memory. For example, if the device has to implement read/modify/writes to the media, performance may be slowed.

In solutions where a platform does not have the physical space to support a capacitor or external energy supply (e.g., attached battery), data loss in volatile memory can occur under system power failure.

In a platform consistent with Compute Express Link (CXL) (e.g., Compute Express Link Specification revision 2.0, version 0.7 (2019), as well as earlier versions, later versions, and variations thereof, including CXL.mem), a memory device may report to a host energy and time required to support flushing its data in volatile memory to persistent memory. The memory device is not made aware of whether the host has any energy to share or for how long. The host may have no energy to provide on power failure or more than enough energy to support flushing data in volatile memory to persistent memory. This may lead to system design that causes data loss on system power failure, as the device cannot save all data before insufficient power is provided to the volatile memory, which causes data loss.

Various embodiments provide an ability for a host system to report to one or more memory devices available energy and amount of time that energy is supplied to the memory device in the event of system power failure (or any system wide failure). Various embodiments provide that the memory device can adapt how much, if any, volatile memory resources to utilize based on the energy amount reported by the host to the memory device to attempt to ensure that on a system power failure (or any other system wide failure) the device can cache data stored in volatile memory to persistent memory. References to content or data can refer to any type of data such as metadata, files, numerical values, characters, records, video, audio, pictures, as well as processor-executable code or source code.

Various embodiments provide that the host can indicate to a memory device an energy source's characteristics (e.g., Watts available for a time upon system failure) with the memory device on system startup (or periodically but prior to power or system failure) and the memory device can determine how much data in volatile memory can be persisted and determine an amount of buffers in volatile memory (e.g., SRAM or DRAM) to utilize (e.g., all, a partial amount, or none). The energy source can be external to the device (e.g., capacitor, battery, solar, etc.). Various embodiments can be used by a memory device connected to an M.2 consistent computer expansion card with connectors.

The host can dynamically update the devices of available power budgeting at system startup and any time prior to power failure. A host may monitor its energy budget and update the device on what it can supply at any time, such as new devices being hot plugged or unplugged. For example, if a host has a limited power protection budget and a new card is added, the host may reduce available energy to device A to provide some energy budget to the newly added device B. Conversely, if device A and B were present at system start and equal energy budget is provided to both, on hot removal of device B, the host may choose to inform device A that all energy is available to device A or maintain the same amount of energy budget to A. Accordingly, based on updates to energy availability, the memory device can scale or adapt how much buffering in volatile memory to use, while ensuring data persistence on a power or system failure event.

In some cases, such as CXL consistence, a host shall notify the memory device of impending system power failure (or any system wide failure) such as machine check, global reset due to failure, operating system (OS) failure, etc. The memory device can persist data in volatile memory after notification of power or system failure.

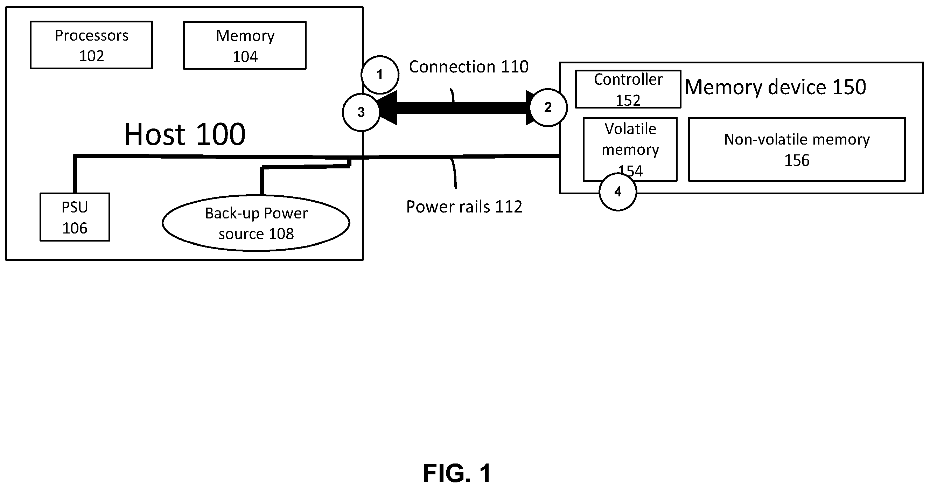

FIG. 1 depicts an example system. For example, host 100 can at least include processors 102 and memory 104, Power Source Unit (PSU) 106, back-up power source 108. Various examples of processors 102, memory 104, and PSU 106 are described herein. In some examples, back-up power source 108 includes one or more of a battery or capacitor. Back-up power source 108 can be charged or re-charged by PSU 106 or renewable sources such as solar or turbine energy. In some examples, host 100 is communicatively coupled to provide data or commands to memory device 150 or receive data or commands from memory device 150 using connection 110. In some examples, memory device 150 can include a circuit board with conductive couplings to controller 152, volatile memory 154, and non-volatile memory 156 as well as other circuity such as a network interface card, accelerators, CPU, GPU, and so forth.

In some examples, connection 110 can provide a transport for management command protocols or memory mapped input output (MMIO) address ranges that could share and exchange the power budget information. In some examples, connection 110 can be consistent with CXL Flex Bus. Section 6 of CXL provides an example of Flex Bus.

In some examples, memory device 150 can include or utilize a controller 152, volatile memory 154 and non-volatile memory 156. Various examples of volatile memory 154 and non-volatile memory 156 are described herein. In some examples, connection 110 is consistent at least with CXL, DDRx (where x is an integer), or PCIe. Connection 110 can provide communications consistent with other communication protocols described herein.

In some examples, host 100 can provide energy to memory device 150 using power rails 112 in an event of a failure event. A failure event can include one or more of: failure of PSU 106 to supply an adequate power level (including power loss), global system reset, machine check, operating system (OS) failure/crash, etc. Various examples of manners of memory device 150 negotiating an amount of energy provided by back-up power source 108 during a failure event and an amount of memory in volatile memory 154 used based on the amount of energy provided by back-up power source 108 during a failure event are described herein.

At (1), host 100 starts up and supplies power using PSU 10 memory device 150 using power rails 112. In some examples, CXL requires a host to notify devices of power failure and allows the device to report its energy needs from the host to satisfy flushing during power failure. At (2), memory device 150 may be discovered by host 100 during enumeration. At (2) memory device 150 can reports its energy needs under power failure or a failure event using connection 110 in order to store all data from volatile memory cache 154 to a non-volatile or persistent memory 156. For example, an amount of energy need can be based on data write rate and amount of data stored in volatile memory (e.g., Bytes). Energy per write can be stored in nonvolatile memory and reported in a management command to host during discovery. At (3), host 100 reports available energy to memory device 150 when the system fails or during a failure event (if any support at all). In some examples, an Advanced Configuration and Power Interface (ACPI) consistent data structure can be used to identify energy (e.g., Watts/time) available for host 100 to provide from back-up power source 108 to memory device 150. Processor-executed software (e.g., OS or CXL driver) can provide a communication to inform memory device 150 of available energy. For example, software (e.g., OS kernel battery/energy driver) executed by processors 102 of host 100 can discover an energy supply (PSU 106 and back-up power source 108). A controller (e.g., part of PSU 106 or processor 102) in host 100 can monitor PSU 106 to determine if there is any power loss or reduction in voltage or current levels below a required minimum voltage or current levels.

For example, host 100 can inform one or more memory devices of a host's energy source support upon system power failure in a variety of manners. A peripheral component interconnect express (PCIe) register (e.g., described in PCI Express Base Specification 1.0 (2002) and predecessors and modifications thereof) could receive a host-written information of available energy (e.g., energy and duration information) and the register content could be copied to the one or more memory devices. Alternatively, this information could be passed to the one or more memory devices from host 100 via a mailbox command interface. The one or more memory devices can support these registers. A mailbox could include an indicator that can be read by host 100 that indicates memory device 150 supports capability to adjust an amount of volatile memory buffer 154 used based on available energy and duration based on a failure event. The mailbox can be used by memory device 150 to indicate that memory device 150 has or does not have the ability to adapt an amount of volatile memory buffer 154 used based on the available energy and duration based on a failure event.

At (4), memory device 150 can scale its use of volatile memory buffers 154 according to available energy during a power failure event. Accordingly, access to such data in volatile memory buffers 154 can be ensured and protected, even under power loss or various system or OS failure scenarios.

During a failure event, PSU 106 can cause power from back-up power source 108 to be supplied to memory device 150 using power rails 112. For example, in accordance with CXL, if power loss is sensed that causes loss of power, host 100 is to inform memory device 150 of power loss (e.g., section 9.9 of CXL 2.0). In memory device 150, controller 152 (e.g., application specific integrated circuit (ASIC), firmware, or system on chip) can manage an amount of volatile memory 154 to use. In some examples, in order for memory usage in memory device 150 to be at or below an amount that can be persisted to non-volatile memory 156 using power from back-up power source 108, controller 152 can determine which data to evict or copy from volatile memory 154 to non-volatile memory 156. For example, evicted data can be least recently used (LRU) or meet other criteria. In some examples, memory device 150 could utilize a capacitor or battery to provide power to volatile memory 154 in an event of power loss from host 100 in addition or alternative to use of the host's back-up power source 108.

In some examples, host 100 may report a partial amount of total battery budget available and, at a later time, host 100 can re-budget energy available to one or more memory devices based on information such as changes in monitored battery usage, battery health, critical percent left (e.g., the battery has degraded to the point where it only has x% of charge left and can be used by a host to determine an available duration of battery), and so forth. For example, if host 100 determines a battery or capacitor (e.g., back-up power source 108) is failing or degrading, host 100 can indicate that no or reduced energy is allocated to a memory device during a power failure event. For example, if 50% of battery is left, host 100 could update maximum wattage supplied and duration to a memory device during a failure event. In some examples, host 100 can update energy available to one or more memory devices based on an available amount of energy (e.g., from a solar source, wind or turbine power source, capacitor) so that if a threshold change in available power is detected, host 100 can adjust an amount of power allocated to one or more memory devices in response to a failure event.

In some examples, energy from back-up power source 108 is provided for energy sourcing to memory devices or other devices (e.g., accelerator cards, network interface, graphics card, video card, or storage cards) and host 100 can use other energy in the event of power loss. However, in some examples, a portion of the energy from back-up power source 108 can be available for host 100 to use in the event of power loss.

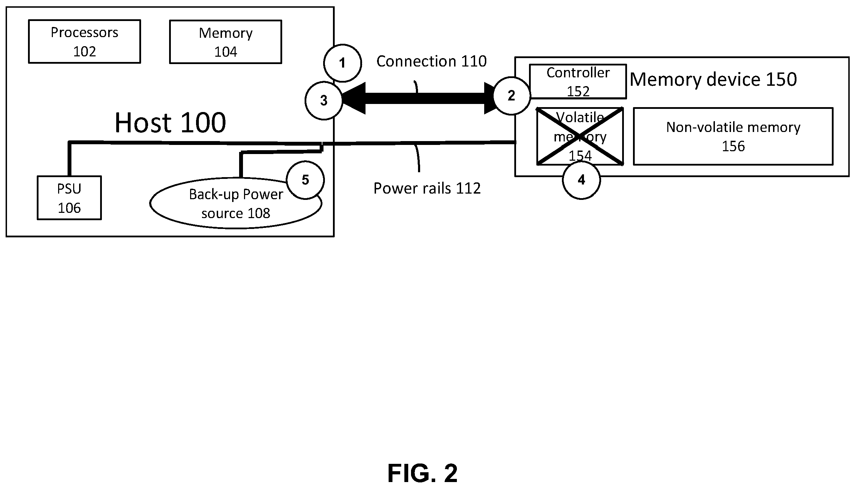

FIG. 2 depicts an example of a scenario in which no energy is available to the device in the event of power loss. Actions (1) and (2) are similar to the description in FIG. 1. At (3) host 100 reports no energy is available in the event of power loss or host never says how much energy it has. In this situation, at (4) memory device 150 disables its volatile buffer 154 and the memory device 150 stores all data into non-volatile memory 156 at runtime, which can increase latency of availability of data from memory device 150 as compared to when volatile memory buffers 154 are used. At (5), a sudden power loss occurs and host 100 informs the device of power failure. There is no danger of data loss as all data is in non-volatile media 156 at time of host power failure. This example flow shows power loss as the failure trigger, but failure could be for other system failure conditions such as global reset, machine check, OS failure/crash, etc. At (6) the host supplies power from back-up power source 108 as power is not available from its power supply.

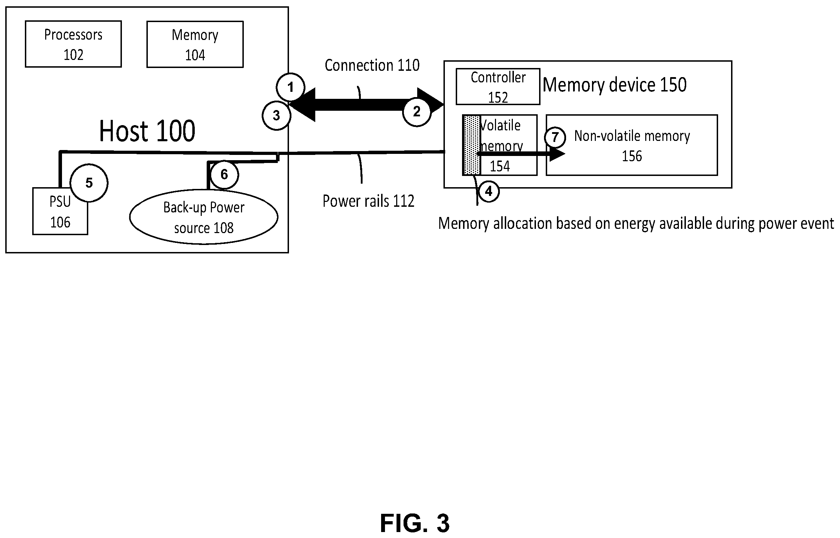

FIG. 3 depicts an example of a device utilizing a portion of its volatile memory. Actions (1) and (2) are similar to the description in FIG. 1. At (3) host 100 reports energy is available in the event of power loss but the available energy is less than an amount of energy needed to persist all data in volatile memory 154. In this situation, at (4) memory device 150 enables use of a portion of its volatile memory buffer 154, but not the entirety. The portion of its volatile memory buffer 154 enabled for use can correspond to an amount of data (e.g., Bytes worth) that could be copied to non-volatile memory 156 given a data transfer rate (e.g., Bytes / second) from volatile memory 154 to non-volatile memory 156 for the available energy and time that the available energy is to be supplied by host 100. Memory device 150 can utilize nonvolatile memory 156 to store some of the data that would have otherwise been stored in volatile memory buffer 154. In some examples, memory device 150 manages an amount of dirty cached data stored in volatile memory 154 (e.g., written data or updated data) based on the energy support provided during a failure event. Memory device 150 could utilize up to the whole volatile cache 154 for clean or read only data and may limit an amount of dirty or written data stored in volatile cache 154 based on available energy. Such write data can be persisted to non-volatile memory 156 in response to a failure event.

At (5), a sudden power loss occurs and host 100 informs memory device 150 of power failure. This example flow shows power loss as the failure trigger, but failure could be for other system failure conditions such as global reset, machine check, OS failure/crash, etc. At (6) host 100 supplies power from back-up power source 108 as power is not available from its power supply and host 100 supplies available energy to memory device 150 using power rails 112. At (7), memory device 150 copies data stored in an allocated used portion of volatile memory buffer 154 to non-volatile memory 156. Memory device 150 flushed its buffers using the energy supplied by the host for a duration from back-up power source 108. Note that in any example described herein, non-volatile memory 156 could be a remote memory or storage device that is accessible using a fabric or network.

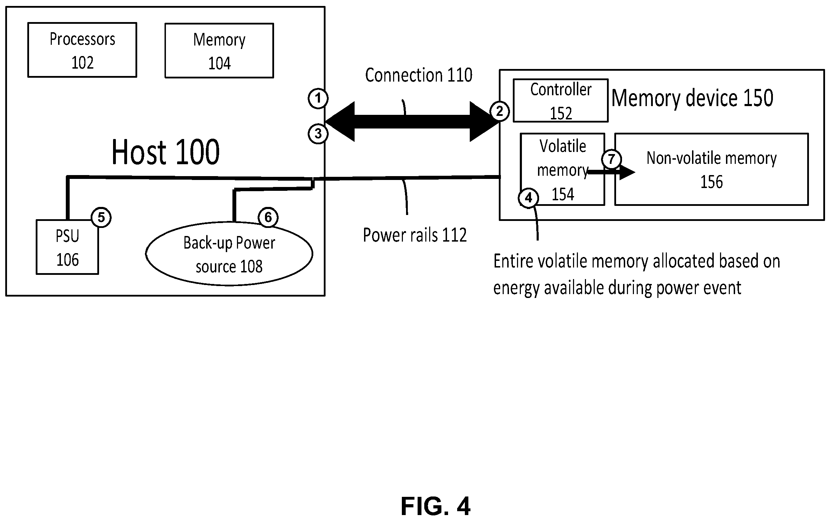

FIG. 4 depicts an example where a memory device is allocated enough energy to persist all data in its volatile memory to persistent memory. Actions (1) and (2) are similar to the description in FIG. 1. At (3), host 100 reports energy is available in the event of power loss and the available energy is more than or equal to an amount of energy needed to persist an amount of data that memory device 150 could store in volatile memory. In this situation, at (4) memory device 150 can enable all of its volatile memory buffer 154 for runtime use. Memory device 150 can inform host how much of the offered energy memory device 150 can use and host 100 can determine if there is energy left over for other devices.

At (5), a sudden power loss occurs and host 100 informs memory device 150 of power failure. This example flow shows power loss as the failure trigger, but failure could be for other system failure conditions such as global reset, machine check, OS failure/crash, etc. At (6) host 100 supplies power from back-up power source 108 to memory device 150 using power rails 112 as power is not available from its power supply. At (7), memory device 150 copies data stored in volatile memory buffer 154 to non-volatile memory 156. Accordingly, memory device 150 flushed its buffers using the energy supplied by host 100 for a duration from back-up power source 108. Note that in any example described herein, the persistent memory could be a remote memory or storage device that is accessible using a fabric or network.

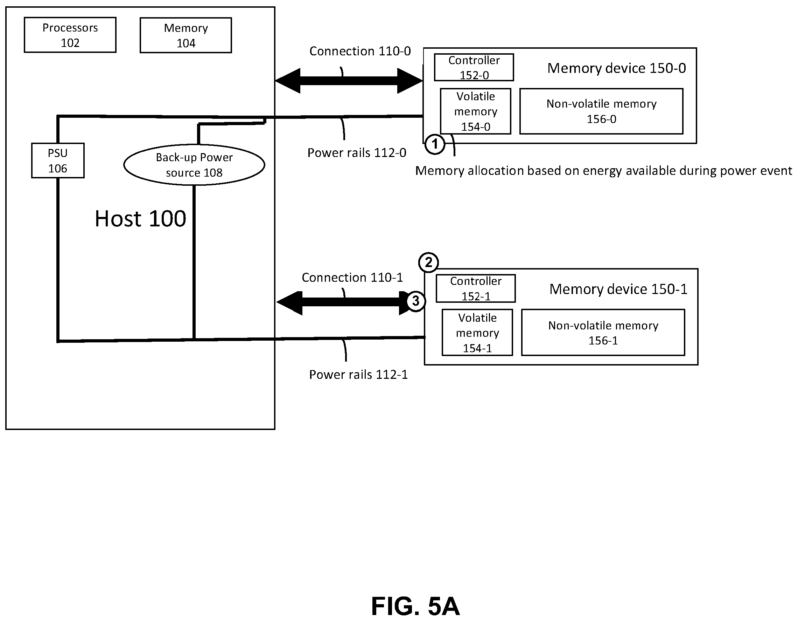

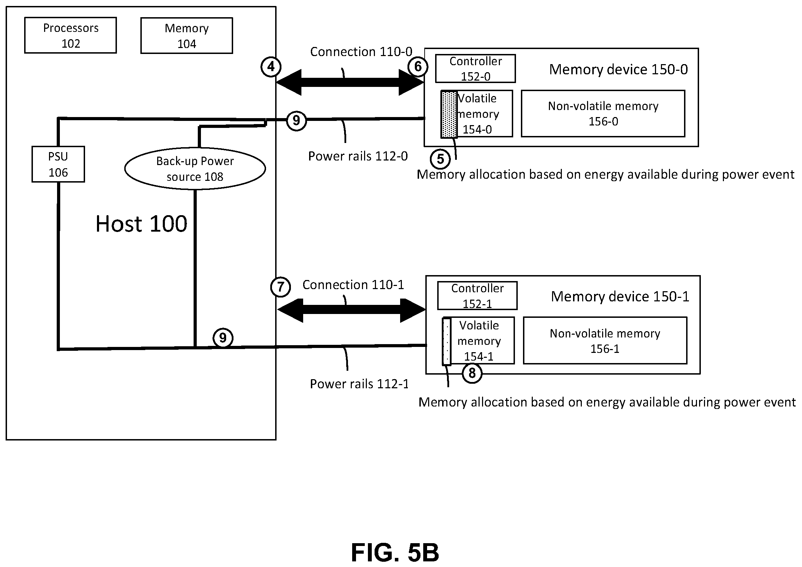

FIGs. 5A and 5B depict examples of allocation of energy to multiple memory devices. Various triggers for energy reallocation can include hot addition or removal of a device. The example follows the allocation of energy to memory device 150 as described with respect to FIG. 4. In FIG. 5A, memory device 150 of FIG. 4 is shown as memory device 150-0 and is allocated energy to persist content in all of its volatile memory buffer 154-0. At (1), as described with respect to FIG. 4, the system is operating and host 100 has allocated energy to memory device 150-0. At (2), memory device 150-1 is coupled to host 100 such as by insertion into a device interface or slot. For example, Section 9.10 of CXL 2.0 allows for a hot plug event to add capabilities and use of memory device 150-1 during operation of host 100 and memory device 150-0. At (3), memory device 150-1 advertises to host 100 how much energy or power memory device 150-1 needs to persist data in its volatile memory buffers 154-1 (e.g., a size of a volatile memory buffer in bytes). An OS or driver executing on host 100 can apply a policy to determine how much energy to allocate to each of memory devices 150-0 and 150-1. An allocation can be set by an administrator or set by a service level agreement (SLA). In some examples, no energy is permitted to be allocated to certain memory devices.

Turning next to FIG. 5B, at (4), host 100 can advertise an amount of energy allocated to memory device 150-0. In this example, the amount of energy allocated to memory device 150-0 is not enough for memory device 150-0 to use its entire volatile memory buffer 154-0. At (5), memory device 150-0 adapts to utilize less than an entirety of its volatile memory buffer 154-0. The portion of its volatile memory buffer 154-0 enabled for use can correspond to an amount of data (e.g., Bytes worth) that could be copied to persistent memory given a data transfer rate (e.g., Bytes / second) from volatile memory 154-0 to non-volatile memory 156-0 for the available energy. Memory device 150-0 can persist data in its 154-0 to non-volatile memory 156-0 where there is insufficient energy to persist that data in the event of power loss. Memory device 150-0 can utilize non-volatile memory 156-0 to store some of the data that would have otherwise been stored in volatile memory buffer 154-0.

At (6), memory device 150-0 can indicate acceptance of allocated energy to host 100. At (7), host 100 can inform memory device 150-1 of its allocated energy, which is not enough to allow memory device 150-1 to use an entirety of its volatile memory buffer 154-1. At (8), in a similar manner as that of memory device 150-0, memory device 150-1 can utilize less than an entirety of its volatile memory buffer 154-1. The portion of volatile memory buffer 154-1 enabled for use can correspond to an amount of data (e.g., Bytes worth) that could be copied to non-volatile memory 156-1 given a data transfer rate (e.g., Bytes / second) from volatile memory 154-1 to non-volatile memory 156-1 for the available energy. Memory device 150-1 can persist data in its volatile memory buffer 154-1 to non-volatile memory 156-1 where there is insufficient energy to persist that data in the event of power loss. Memory device 150-1 can utilize non-volatile memory 156-1 to store some of the data that would have otherwise been stored in volatile memory buffer non-volatile memory 154-1. Note that in some cases, any memory device may accept an energy allocation available during a failure event but consider a safety margin in allocating use of a volatile memory so that there could be some power left-over after persisting data stored in volatile memory to non-volatile memory.

At (9), a power loss occurs and host 100 informs memory device 150-0 and 150-1 of power failure and host 100 supplies power from back-up power source 108 and host 100 supplies available energy to memory devices 150-0 and 150-1. Memory devices 150-0 and 150-1copy data stored in volatile memory buffers 154-0 and 154-1 to respective non-volatile memory devices 156-0 and 156-1. This example flow shows power loss as the failure trigger, but failure could be for other system failure conditions such as global reset, machine check, OS failure/crash, etc. Note that in any example described herein, any persistent or non-volatile memory could be a remote memory or storage device that is accessible using a fabric or network. Accordingly, any of memory devices 150-0 or 150-1 can utilize a fabric or network interface to persist data in a volatile memory buffer to a fabric or network accessible nonvolatile memory or powered volatile memory device. The power budget used to persistent data over a fabric or network may be higher than used to persist data to a local non-volatile memory and an amount of volatile memory can be allocated to consider that more power may be needed to persist memory using a fabric or network connected memory devices.

For example, a memory device A utilizes volatile write cache of size 4GB and uses a write power of 8W with a write rate from volatile memory to persistent memory of 1GB/s and requests 8W for 4 seconds to flush its volatile buffers to persistent media on power failure. If host reports to the memory device support for 10W for 5 seconds on system power failure, then the memory device A utilizes all of its volatile buffers (this meets the energy need to ensure all data is flushed). If host reports no energy to device (or not enough) on system failure, then the device A may change its internal policy to not use any volatile buffers (or only utilize it as a read cache) for any persistent data written and only return completion when data is fully stored in persistent media per issuance. Device A may have lower performance, but data loss protection is solely handled by the device in this case.

If host reports 4W for 4 seconds on system power failure, then device A may choose to use only a partial amount of its volatile buffer to store data written. In this case, device A could throttle on power failure notification to accommodate the lower wattage (to only write at 500MB/s), and as such, would only utilize 2GB of the volatile buffers for persistent write data.

As another example, a system starts with two memory devices A and B and memory device B has the same requirements described above as memory device A. The host can sustain 8 watts for 4 seconds total and reports to each device it can provide 4 watts to each of memory device A and B for 4 seconds. As in the previous example, each device adapts to the reported power available during a failure event from the host. Later, device B is hot removed. Upon the detection of the removal of device B, the host updates the device it may provide 8 watts for 4 seconds. Device A adjusts its internal policy and begins using all of its volatile memory cache and device performance increases.

For example, if a system starts with memory device A and the host reports it can provide 8 watts for 4 seconds, then memory device A utilizes all of its volatile memory cache to provide maximum performance. Later, a memory device B is hot inserted. As a result of the new device insertion, the host reports to both device A and B it can only provide 4 watts for 4 seconds to each in an ordered fashion. Device A (via a handshake) can reduce its usage of the volatile memory cache to match the new conditions prior to reporting success to the new power provisioning it received. The host can reports to device B it may only provide 4 watts for 4 seconds and device B only uses half of its cache. In all the example cases above, the device ensures that the data written is persisted in all system related failures (power loss, global reset, machine check, OS failure/crash, etc.), but has adapted based on the host energy support reported to it.

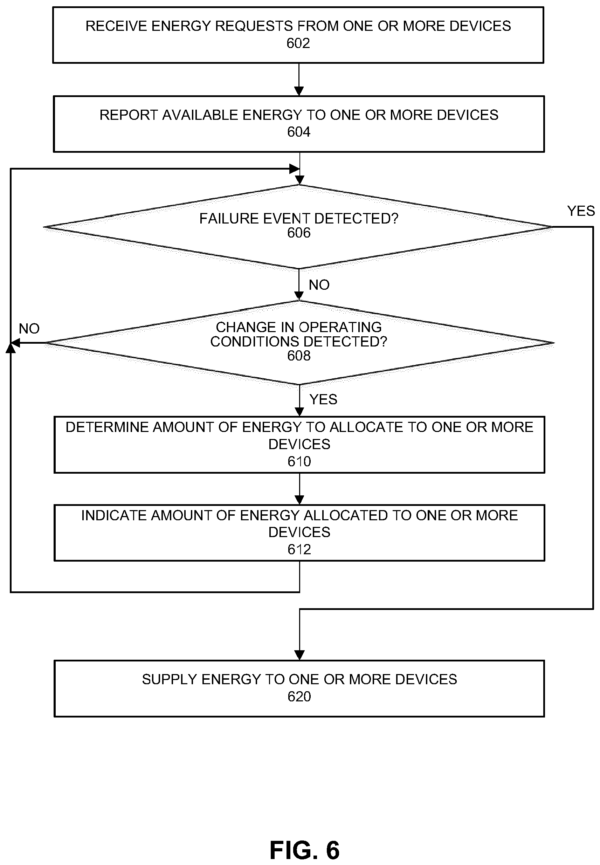

FIG. 6 depicts an example process. The process is performed by a host system. At 602, energy requests from one or more devices in an event of power loss are received. The devices can include circuit boards with one or more attached volatile memory devices, nonvolatile memory devices, processors, accelerators, network interface devices. At 604, the host system reports available energy to each memory device. In response, the one or more memory devices can allocate use of its volatile memory buffer based on the available energy and amount of time the energy is to be provided. For example, based on an amount of energy used to persist data from volatile to non-volatile memory, an amount of volatile memory can be allocated for use to write or update data. Some margin of safety can be utilized so that some energy is left over after persisting data using available energy. At 606, a determination is made as to whether a failure event occurs. A failure event can include one or more of: power reduction, power loss, voltage reduction or loss, current reduction or loss, global reset, machine check, OS failure/crash, etc. detected at a host system. If a failure event is detected, the process can continue to 620, where the host device can supply energy to the one or more memory devices in accordance with energy allocated to the one or more memory devices. If a failure event is not detected the process can continue to 608.

At 608, a determination is made if there is a change in operating conditions. A change in operating conditions can include connection of a memory device to the host device, removal of a memory device from connection with the host device, request for a change in energy. If a change in operating conditions is determined, the process can continue to 610. If no change in operating conditions is determined, the process can return to 606.

At 610, the host determines an amount of energy to allocate to one or more connected memory devices based on an applicable policy and at 612, indicate to each memory device an amount of available energy. For example, a policy can specify certain devices can be allocated at least a particular percentage of available energy or a minimum amount of energy. A policy can specify certain devices receive no allocation of available energy. The process can return to 606.

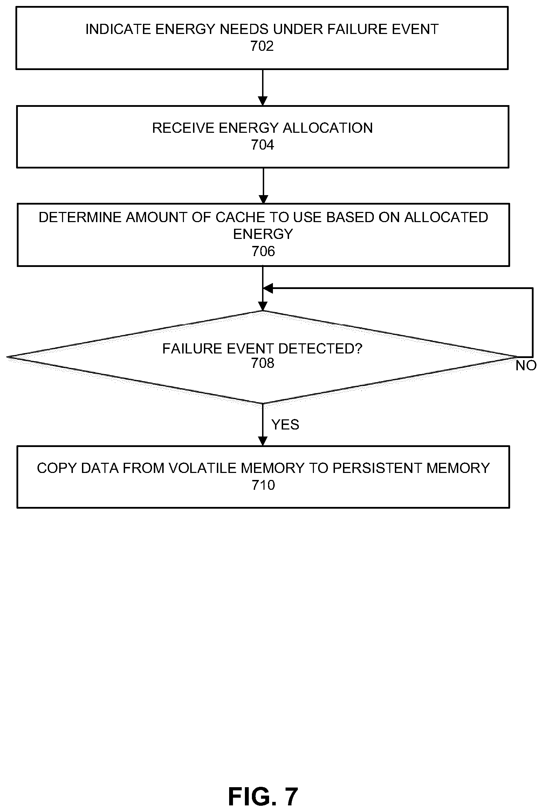

FIG. 7 depicts an example process. The process can be performed by one or more devices. The devices can include circuit boards with one or more attached volatile memory devices, non-volatile memory devices, processors, accelerators, network interface devices. At 702, a device can indicate energy needs for a failure event. A failure event can include one or more of: power reduction, power loss, voltage reduction or loss, current reduction or loss, global reset, machine check, OS failure/crash, etc. detected at a host system. At 704, the device can receive an energy allocation from a host during a failure event. At 706, the device can determine an extent of use of a volatile cache with ability to persist content stored in the used volatile cache based on the allocated energy. The amount of volatile cache can be allocated for storing written data or updated data. For example, if the device determines the allocated energy is sufficient to allow persist content stored in an entire volatile buffer, the device can utilize the entire volatile buffer. For example, if the device determines the allocated energy is sufficient to allow persist content stored in less than an entirety of an entire volatile buffer, the device can utilize an amount of the entire volatile buffer that can be persisted, but not the entire volatile buffer. The device can utilize persistent memory to store some of the data that would have otherwise been stored in volatile memory buffer. If there has been a change in energy allocation and the amount of energy allows for less use of the volatile memory buffer than previously allocated, for content not expected to be persisted using available energy, the device can copy such content from the volatile memory buffer to persistent memory.

At 708, a determination can be made as to whether a failure event occurs. For example, a host can indicate occurrence of a failure event to the memory device. For example, the host can supply power from its capacitor (CAP) or battery to the memory device. If a failure event is detected, the process can continue to 710 where the memory device can copy data stored in their volatile memory buffers to their persistent memory. If a failure event is not detected, the process can return to 708. Note that in any example described herein, any persistent memory could be a remote memory or storage device that is accessible using a fabric or network.

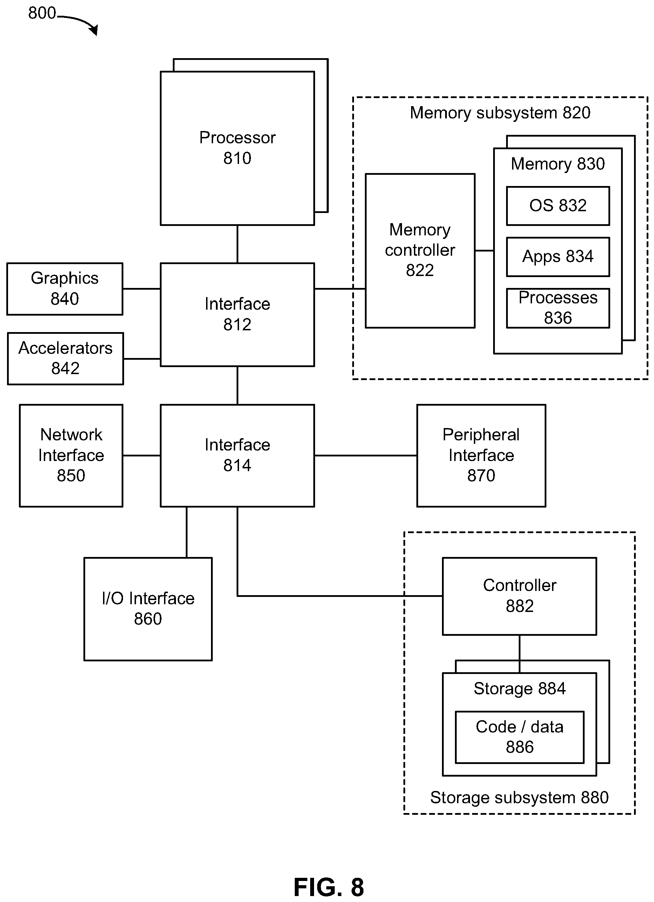

FIG. 8 depicts a system. The system can use embodiments described herein to determine an amount of volatile memory to use and to persist memory using available power during a failure event. System 800 includes processor 810, which provides processing, operation management, and execution of instructions for system 800. Processor 810 can include any type of microprocessor, central processing unit (CPU), graphics processing unit (GPU), processing core, or other processing hardware to provide processing for system 800, or a combination of processors. Processor 810 controls the overall operation of system 800, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 800 includes interface 812 coupled to processor 810, which can represent a higher speed interface or a high throughput interface for system components that needs higher bandwidth connections, such as memory subsystem 820 or graphics interface components 840, or accelerators 842. Interface 812 represents an interface circuit, which can be a standalone component or integrated onto a processor die. Where present, graphics interface 840 interfaces to graphics components for providing a visual display to a user of system 800. In one example, graphics interface 840 can drive a high definition (HD) display that provides an output to a user. High definition can refer to a display having a pixel density of approximately 100 PPI (pixels per inch) or greater and can include formats such as full HD (e.g., 1080p), retina displays, 4K (ultra-high definition or UHD), or others. In one example, the display can include a touchscreen display. In one example, graphics interface 840 generates a display based on data stored in memory 830 or based on operations executed by processor 810 or both. In one example, graphics interface 840 generates a display based on data stored in memory 830 or based on operations executed by processor 810 or both.

Accelerators 842 can be a programmable and/or fixed function offload engine that can be accessed or used by a processor 810 or network interface 850. For example, an accelerator can include one or more offload processors described herein. For example, an accelerator among accelerators 842 can provide compression (DC) capability, cryptography services such as public key encryption (PKE), cipher, hash/authentication capabilities, decryption, or other capabilities or services. In some embodiments, in addition or alternatively, an accelerator among accelerators 842 provides field select controller capabilities as described herein. In some cases, accelerators 842 can be integrated into a CPU socket (e.g., a connector to a motherboard or circuit board that includes a CPU and provides an electrical interface with the CPU). For example, accelerators 842 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs). Accelerators 842 can provide multiple neural networks, CPUs, processor cores, general purpose graphics processing units, or graphics processing units can be made available for use by artificial intelligence (AI) or machine learning (ML) models. For example, the AI model can use or include any or a combination of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models.

Memory subsystem 820 represents the main memory of system 800 and provides storage for code to be executed by processor 810, or data values to be used in executing a routine. Memory subsystem 820 can include one or more memory devices 830 such as read-only memory (ROM), flash memory, one or more varieties of random access memory (RAM) such as DRAM, or other memory devices, or a combination of such devices. Memory 830 stores and hosts, among other things, operating system (OS) 832 to provide a software platform for execution of instructions in system 800. Additionally, applications 834 can execute on the software platform of OS 832 from memory 830. Applications 834 represent programs that have their own operational logic to perform execution of one or more functions. Processes 836 represent agents or routines that provide auxiliary functions to OS 832 or one or more applications 834 or a combination. OS 832, applications 834, and processes 836 provide software logic to provide functions for system 800. In one example, memory subsystem 820 includes memory controller 822, which is a memory controller to generate and issue commands to memory 830. It will be understood that memory controller 822 could be a physical part of processor 810 or a physical part of interface 812. For example, memory controller 822 can be an integrated memory controller, integrated onto a circuit with processor 810.

While not specifically illustrated, it will be understood that system 800 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a Hyper Transport or industry standard architecture (ISA) bus, a small computer system interface (SCSI) bus, a universal serial bus (USB), or an Institute of Electrical and Electronics Engineers (IEEE) standard 1394 bus (Firewire).

In one example, system 800 includes interface 814, which can be coupled to interface 812. In one example, interface 814 represents an interface circuit, which can include standalone components and integrated circuitry. In one example, multiple user interface components or peripheral components, or both, couple to interface 814. Network interface 850 provides system 800 the ability to communicate with remote devices (e.g., servers or other computing devices) over one or more networks. Network interface 850 can include an Ethernet adapter, wireless interconnection components, cellular network interconnection components, USB (universal serial bus), or other wired or wireless standards-based or proprietary interfaces. Network interface 850 can transmit data to a device that is in the same data center or rack or a remote device, which can include sending data stored in memory. Network interface 850 can receive data from a remote device, which can include storing received data into memory. Various embodiments can be used in connection with network interface 850, processor 810, and memory subsystem 820.

In one example, system 800 includes one or more input/output (I/O) interface(s) 860. I/O interface 860 can include one or more interface components through which a user interacts with system 800 (e.g., audio, alphanumeric, tactile/touch, or other interfacing). Peripheral interface 870 can include any hardware interface not specifically mentioned above. Peripherals refer generally to devices that connect dependently to system 800. A dependent connection is one where system 800 provides the software platform or hardware platform or both on which operation executes, and with which a user interacts.

In one example, system 800 includes storage subsystem 880 to store data in a nonvolatile manner. In one example, in certain system implementations, at least certain components of storage 880 can overlap with components of memory subsystem 820. Storage subsystem 880 includes storage device(s) 884, which can be or include any conventional medium for storing large amounts of data in a nonvolatile manner, such as one or more magnetic, solid state, or optical based disks, or a combination. Storage 884 holds code or instructions and data 886 in a persistent state (e.g., the value is retained despite interruption of power to system 800). Storage 884 can be generically considered to be a "memory," although memory 830 is typically the executing or operating memory to provide instructions to processor 810. Whereas storage 884 is nonvolatile, memory 830 can include volatile memory (e.g., the value or state of the data is indeterminate if power is interrupted to system 800). In one example, storage subsystem 880 includes controller 882 to interface with storage 884. In one example controller 882 is a physical part of interface 814 or processor 810 or can include circuits or logic in both processor 810 and interface 814.

A volatile memory is memory whose state (and therefore the data stored in it) is indeterminate if power is interrupted to the device. Dynamic volatile memory requires refreshing the data stored in the device to maintain state. One example of dynamic volatile memory incudes DRAM (Dynamic Random Access Memory), or some variant such as Synchronous DRAM (SDRAM). Another example of volatile memory includes a cache. A memory subsystem as described herein may be compatible with a number of memory technologies, such as DDR3 (Double Data Rate version 3, original release by JEDEC (Joint Electronic Device Engineering Council) on June 27, 2007). DDR4 (DDR version 4, initial specification published in September 2012 by JEDEC), DDR4E (DDR version 4), LPDDR3 (Low Power DDR version3, JESD209-3B, August 2013 by JEDEC), LPDDR4) LPDDR version 4, JESD209-4, originally published by JEDEC in August 2014), WIO2 (Wide Input/output version 2, JESD229-2 originally published by JEDEC in August 2014, HBM (High Bandwidth Memory, JESD325, originally published by JEDEC in October 2013, LPDDR5 (currently in discussion by JEDEC), HBM2 (HBM version 2), currently in discussion by JEDEC, or others or combinations of memory technologies, and technologies based on derivatives or extensions of such specifications.

A non-volatile memory (NVM) device is a memory whose state is determinate even if power is interrupted to the device. In one embodiment, the NVM device can comprise a block addressable memory device, such as NAND technologies, or more specifically, multi-threshold level NAND flash memory (for example, Single-Level Cell ("SLC"), Multi-Level Cell ("MLC"), Triple-Level Cell ("TLC"), Quad-Level Cell ("QLC"), Penta-Level Cell ("PLC") (e.g., 5 bits per cell) or some other NAND). A NVM device can also comprise a byteaddressable write-in-place three dimensional cross point memory device, or other byte addressable write-in-place NVM device (also referred to as persistent memory), such as single or multi-level Phase Change Memory (PCM) or phase change memory with a switch (PCMS), NVM devices that use chalcogenide phase change material (for example, chalcogenide glass), resistive memory including metal oxide base, oxygen vacancy base and Conductive Bridge Random Access Memory (CB-RAM), nanowire memory, ferroelectric random access memory (FeRAM, FRAM), magneto resistive random access memory (MRAM) that incorporates memristor technology, spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

A power supply unit or power source (not depicted) provides power to the components of system 800. More specifically, power source typically interfaces to one or multiple power supplies in system 800 to provide power to the components of system 800. In one example, the power supply includes an AC to DC (alternating current to direct current) adapter to plug into a wall outlet. Such AC power can be renewable energy (e.g., solar power) power source. In one example, power source includes a DC power source, such as an external AC to DC converter. In one example, power source or power supply includes wireless charging hardware to charge via proximity to a charging field. In one example, power source can include an internal battery, alternating current supply, motion-based power supply, solar power supply, or fuel cell source.

In an example, system 800 can be implemented using interconnected compute sleds of processors, memories, storages, network interfaces, and other components. High speed interconnects can be used such as PCIe, Ethernet, or optical interconnects (or a combination thereof).

Embodiments herein may be implemented in various types of computing and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning groups of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, each blade includes components common to conventional servers, including a main printed circuit board (main board) providing internal wiring (e.g., buses) for coupling appropriate integrated circuits (ICs) and other components mounted to the board.

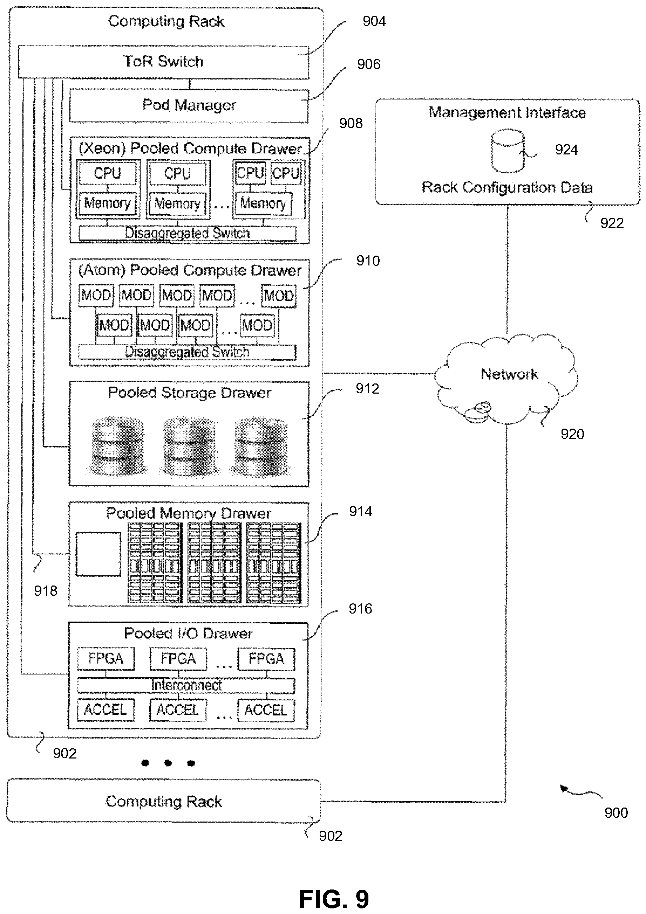

FIG. 9 depicts an environment 900 that includes multiple computing racks 902, each including a Top of Rack (ToR) switch 904, a pod manager 906, and a plurality of pooled system drawers. The environment can use embodiments described herein to determine an amount of volatile memory to use and to persist memory using available power during a failure event. Generally, the pooled system drawers may include pooled compute drawers and pooled storage drawers. Optionally, the pooled system drawers may also include pooled memory drawers and pooled Input/Output (I/O) drawers. In the illustrated embodiment the pooled system drawers include an Intel^{®} XEON^{®} pooled computer drawer 908, and Intel^{®} ATOM^{™} pooled compute drawer 910, a pooled storage drawer 912, a pooled memory drawer 914, and a pooled I/O drawer 916. Each of the pooled system drawers is connected to ToR switch 904 via a high-speed link 918, such as a 40 Gigabit/second (Gb/s) or 100Gb/s Ethernet link or a 100+ Gb/s Silicon Photonics (SiPh) optical link. In one embodiment high-speed link 918 comprises an 800 Gb/s SiPh optical link.

Multiple of the computing racks 902 may be interconnected via their ToR switches 904 (e.g., to a pod-level switch or data center switch), as illustrated by connections to a network 920. In some embodiments, groups of computing racks 902 are managed as separate pods via pod manager(s) 906. In one embodiment, a single pod manager is used to manage all of the racks in the pod. Alternatively, distributed pod managers may be used for pod management operations.

Environment 900 further includes a management interface 922 that is used to manage various aspects of the environment. This includes managing rack configuration, with corresponding parameters stored as rack configuration data 924.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip groups, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction groups, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. A processor can be one or more combination of a hardware state machine, digital control logic, central processing unit, or any hardware, firmware and/or software elements.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or embodiment. Any aspect described herein can be combined with any other aspect or similar aspect described herein, regardless of whether the aspects are described with respect to the same figure or element. Division, omission or inclusion of block functions depicted in the accompanying figures does not infer that the hardware components, circuits, software and/or elements for implementing these functions would necessarily be divided, omitted, or included in embodiments.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal. The terms "follow" or "after" can refer to immediately following or following after some other event or events. Other sequences of steps may also be performed according to alternative embodiments. Furthermore, additional steps may be added or removed depending on the particular applications. Any combination of changes can be used and one of ordinary skill in the art with the benefit of this disclosure would understand the many variations, modifications, and alternative embodiments thereof.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present. Additionally, conjunctive language such as the phrase "at least one of X, Y, and Z," unless specifically stated otherwise, should also be understood to mean X, Y, Z, or any combination thereof, including "X, Y, and/or Z."'

## Claims

1. A system comprising a host system (100) for coupling to a plurality of memory devices (150), each memory device (150) comprising a controller (152), a volatile memory device (154), and a non-volatile memory device (156), the host system (100) configured to conduct the steps of:
receiving (602) an indication of the required energy in a failure event from each of the memory devices;
sending (604) an indication of available energy to each memory device;
continuously determining (606, 608) whether a failure event occurs and if there is a change in operating conditions;
if a change in operating conditions is determined: determining (610) an amount of energy to allocate to one or more connected memory devices (150) based on an applicable policy and indicating (612) the amount of energy to each memory device,
wherein a change in operating conditions includes connection of a memory device (150) to the host device (100), removal of a memory device (150) from connection with the host device (100), and/or request for a change in energy.

2. The system of claim 1, wherein the policy specifies that:
certain devices can be allocated at least a particular percentage of available energy or a minimum amount of energy, and/or
certain devices receive no allocation of available energy.

3. The system of any of the preceding claims, further comprising a memory device (150) of the plurality of memory devices, wherein the controller (152) of the memory device (150) is configured to:
allocate an amount of the volatile memory device (154) based on an amount of energy available to the device (150) during the failure event,
indicate the amount of energy to copy data from the volatile memory device (154) to the nonvolatile memory device (156) as the required energy in a failure event, and
receive the indication of the amount of energy available to the volatile memory device (154) during a failure event.

4. The system of claim 3, wherein the controller (152) of the memory device (150) is further configured to adjust the allocated amount of the volatile memory device (154) based on the indication of the amount of energy available to the volatile memory device (154) during a failure event being different than a prior indication of the amount of energy available to the volatile memory device (154) during a failure event.

5. The system of claim 3 or 4, wherein the controller (152) of the memory device (150) is further configured to adjust the allocated amount of use of the volatile memory device (154) based on the indication of the amount of energy available to back-up content of the volatile memory device during a failure event being different than a prior indication of the amount of energy available to the memory device during a failure event.

6. The system of any of the preceding claims, wherein the amount of energy available to one or more of the memory devices (150) during a failure event comprises watts over an amount of time.

7. The system of any of the preceding claims, wherein the failure event comprises one or more of: power reduction, power loss, voltage reduction or loss, current reduction or loss, global reset, machine check, or operating system (OS) failure or crash.

8. The system of any of the preceding claims, wherein the allocated amount of the volatile memory device (154) comprises a number of bytes.

9. The system of any of the preceding claims,, wherein the host device (100) is configured to supply power to the device (150) during the failure event and wherein the host device (100) is coupled to the memory device (150) using an interface consistent with Compute Express Link (CXL).

## Patentansprüche

1. System, das ein Hostsystem (100) zum Koppeln mit mehreren Speichervorrichtungen (150) umfasst, wobei jede Speichervorrichtung (150) eine Steuerung (152), eine flüchtige Speichervorrichtung (154) und eine nichtflüchtige Speichervorrichtung (156) umfasst, wobei das Hostsystem (100) dazu ausgelegt ist, die folgenden Schritte durchzuführen:
Empfangen (602) einer Angabe der erforderlichen Energie bei einem Fehlerereignis von jeder der Speichervorrichtungen;
Senden (604) einer Angabe verfügbarer Energie an jede Speichervorrichtung;
kontinuierliches Bestimmen (606, 608), ob ein Fehlerereignis auftritt und ob eine Änderung der Betriebsbedingungen vorliegt;
wenn eine Änderung der Betriebsbedingungen bestimmt wird:
Bestimmen (610) einer einer oder mehreren verbundenen Speichervorrichtungen (150) zuzuweisenden Energiemenge basierend auf einer geltenden Richtlinie und Angeben (612) der Energiemenge an jede Speichervorrichtung,
wobei eine Änderung der Betriebsbedingungen eine Verbindung einer Speichervorrichtung (150) mit der Hostvorrichtung (100), eine Trennung einer Speichervorrichtung (150) von der Verbindung mit der Hostvorrichtung (100) und/oder eine Anforderung einer Änderung der Energie beinhaltet.

2. System nach Anspruch 1, wobei die Richtlinie spezifiziert, dass:
bestimmten Vorrichtung mindestens ein bestimmter Prozentsatz verfügbarer Energie oder eine minimale Energiemenge zugewiesen werden kann und/oder
bestimmte Vorrichtungen keine Zuweisung verfügbarer Energie erhalten.

3. System nach einem der vorhergehenden Ansprüche, das ferner eine Speichervorrichtung (150) der mehreren Speichervorrichtungen umfasst, wobei die Steuerung (152) der Speichervorrichtung (150) zu Folgendem ausgelegt ist:
Zuweisen einer Menge der flüchtigen Speichervorrichtung (154) basierend auf einer Energiemenge, die der Vorrichtung (150) während des Fehlerereignisses zur Verfügung steht,
Angeben der Energiemenge zum Kopieren von Daten aus der flüchtigen Speichervorrichtung (154) in die nichtflüchtige Speichervorrichtung (156) als die erforderliche Energie bei einem Fehlerereignis und
Empfangen der Angabe der Energiemenge, die der flüchtigen Speichervorrichtung (154) während eines Fehlerereignisses zur Verfügung steht.

4. System nach Anspruch 3, wobei die Steuerung (152) der Speichervorrichtung (150) ferner dazu ausgelegt ist, die zugewiesene Menge der flüchtigen Speichervorrichtung (154) basierend darauf anzupassen, dass sich die Angabe der Energiemenge, die der flüchtigen Speichervorrichtung (154) während eines Fehlerereignisses zur Verfügung steht, von einer vorherigen Angabe der Energiemenge, die der flüchtigen Speichervorrichtung (154) während eines Fehlerereignisses zur Verfügung steht, unterscheidet.

5. System nach Anspruch 3 oder 4, wobei die Steuerung (152) der Speichervorrichtung (150) ferner dazu ausgelegt ist, das zugewiesene Nutzungsausmaß der flüchtigen Speichervorrichtung (154) basierend darauf anzupassen, dass sich die Angabe der Energiemenge, die zur Sicherung eines Inhalts der flüchtigen Speichervorrichtung während eines Fehlerereignisses zur Verfügung steht, von einer vorherigen Angabe der Energiemenge, die der Speichervorrichtung während eines Fehlerereignisses zur Verfügung steht, unterscheidet.

6. System nach einem der vorhergehenden Ansprüche, wobei die Energiemenge, die einer oder mehreren der Speichervorrichtungen (150) während eines Fehlerereignisses zur Verfügung steht, Watt über eine Zeitdauer umfasst.

7. System nach einem der vorhergehenden Ansprüche, wobei das Fehlerereignis eines oder mehrere von Leistungsreduzierung, Leistungsverlust, Spannungsreduzierung oder -verlust, Stromreduzierung oder -verlust, globalem Zurücksetzen, Maschinenprüfung oder Fehler oder Absturz des Betriebssystems (OS) umfasst.

8. System nach einem der vorhergehenden Ansprüche, wobei die zugewiesene Menge der flüchtigen Speichervorrichtung (154) eine Anzahl von Bytes umfasst.

9. System nach einem der vorhergehenden Ansprüche, wobei die Hostvorrichtung (100) dazu ausgelegt ist, die Vorrichtung (150) während des Fehlerereignisses mit Leistung zu versorgen, und wobei die Hostvorrichtung (100) unter Verwendung einer Compute Express Link (CXL) entsprechenden Schnittstelle mit der Speichervorrichtung (150) gekoppelt ist.

## Revendications

1. Système, comprenant un système hôte (100) destiné à être couplé à une pluralité de dispositifs de mémoire (150), chaque dispositif de mémoire (150) comprenant un contrôleur (152), un dispositif de mémoire volatile (154), et un dispositif de mémoire non volatile (156), le système hôte (100) étant configuré pour réaliser les étapes suivantes :
recevoir (602) une indication de l'énergie requise dans un événement de défaillance en provenance de chaque du dispositifs de mémoire ;
envoyer (604) une indication d'énergie disponible, à chaque dispositif de mémoire ;
déterminer en continu (606, 608) le fait qu'un événement de défaillance se produit et s'il y a est un changement de conditions de fonctionnement ;
si un changement de conditions de fonctionnement est déterminé : déterminer (610) une quantité d'énergie à attribuer à un ou à plusieurs dispositifs de mémoire connectés (150), sur la base d'une politique applicable, et indiquer (612) la quantité d'énergie à chaque dispositif de mémoire,
dans lequel un changement de conditions de fonctionnement inclut la connexion d'un dispositif de mémoire (150) au dispositif hôte (100), le retrait d'un dispositif de mémoire (150) de la connexion au dispositif hôte (100), et/ou une demande d'un changement d'énergie.

2. Système de la revendication 1, dans lequel la politique spécifie que :
au moins un pourcentage particulier d'énergie disponible ou une quantité minimum d'énergie peut être attribué(e) à certains dispositifs, et/ou
certains dispositifs ne reçoivent aucune attribution d'énergie disponible.

3. Système de quelconques des revendications précédentes, comprenant en outre un dispositif de mémoire (150) de la pluralité de dispositifs de mémoire, dans lequel le contrôleur (152) du dispositif de mémoire (150) est configuré pour :
attribuer une quantité du dispositif de mémoire volatile (154), sur la base d'une quantité d'énergie disponible pour le dispositif (150) durant l'événement de défaillance,
indiquer la quantité d'énergie pour copier des données depuis le dispositif de mémoire volatile (154) sur le dispositif de mémoire non volatile (156), en tant qu'énergie requise dans un événement de défaillance, et
recevoir l'indication de la quantité d'énergie disponible pour le dispositif de mémoire volatile (154) durant un événement de défaillance.

4. Système de la revendication 3, dans lequel le contrôleur (152) du dispositif de mémoire (150) est en outre configuré pour ajuster la quantité attribuée du dispositif de mémoire volatile (154), sur la base du fait que l'indication de la quantité d'énergie disponible pour le dispositif de mémoire volatile (154) durant un événement de défaillance est différente d'une indication précédente de la quantité d'énergie disponible pour le dispositif de mémoire volatile (154) durant un événement de défaillance.

5. Système de la revendication 3 ou 4, dans lequel le contrôleur (152) du dispositif de mémoire (150) est en outre configuré pour ajuster la quantité attribuée d'utilisation du dispositif de mémoire volatile (154), sur la base du fait que l'indication de la quantité d'énergie disponible pour un contenu de secours du dispositif de mémoire volatile durant un événement de défaillance est différente d'une indication précédente de la quantité d'énergie disponible pour le dispositif de mémoire durant un événement de défaillance.

6. Système de quelconques des revendications précédentes, dans lequel la quantité d'énergie disponible pour un ou plusieurs des dispositifs de mémoire (150) durant un événement de défaillance comprend des watts au cours d'un laps de temps.

7. Système de quelconques des revendications précédentes, dans lequel l'événement de défaillance comprend un ou plusieurs éléments parmi une réduction de puissance, une perte de puissance, une réduction ou une perte de tension, une réduction ou une perte de courant, une réinitialisation globale, un vérification machine, ou une défaillance ou une panne de système d'exploitation (Operating System, OS).

8. Système de quelconques des revendications précédentes, dans lequel la quantité attribuée du dispositif de mémoire volatile (154) comprend un nombre d'octets.

9. Système de quelconques des revendications précédentes, dans lequel le dispositif hôte (100) est configuré pour fournir une puissance au dispositif (150) durant l'événement de défaillance et dans lequel le dispositif hôte (100) est couplé au dispositif de mémoire (150) en utilisant une interface conforme à Compute Express Link (CXL).
